# EUROPEAN PATENT SPECIFICATION

(11) **EP 1 590 715 B1**
(45) Date of publication and mention of the grant of the patent: **22.07.2009**
(21) Application number: 04706718.6
(22) Date of filing: 30.01.2004
(51) Int. Cl.: G05D 23/13

(54) **THERMOSTATIC MIXER WITH FLOW DIVERTING MEANS**
THERMOSTATISCHES MISCHVENTIL MIT STRÖMUNGSABLENKUNG
AMELIORATIONS DE MELANGEURS THERMOSTATIQUES

(30) Priority: 01.02.2003 GB 0302340
(43) Date of publication of application: 02.11.2005
(73) Proprietor: Kohler Mira Ltd, Cheltenham Gloucestershire GL52 5EP (GB)
(72) Inventor: BECK, Nicholas John, Gloucestershire GL20 5SS (GB)
(74) Representative: Wightman, David Alexander
(86) International application number: PCT/GB2004/000391
(87) International publication number: WO 2004/068252

(56) References cited:
- FR-A- 1 560 285

## Description

This invention concerns thermostatic mixers as defined in the preamble of claim 1. Such a mixer is known from FR-A-1560285. The thermostatic mixers of the invention may be used for water supply installations, especially, but not exclusively, for mixing hot and cold water for ablutionary showers for domestic installations.

A common type of thermostatic mixer employs a proportioning valve to control the relative proportions in which hot and cold water are mixed to provide a source of water having a desired temperature. Typically, the proportioning valve is connected to a thermostat responsive to the outlet water temperature to adjust the proportioning valve to alter the relative proportions of admixed hot and cold water in response to detected changes in the outlet water temperature so as to maintain the desired outlet water temperature.

A disadvantage of such direct acting thermostats is that there has to be a remaining outlet water temperature error in order for the proportioning valve to be deflected from the initial set position. This amount of remaining error is of concern for some of the operating conditions that can occur.

The factors that can change to cause the outlet water temperature to deviate from the set value are inlet temperatures, inlet pressures and outlet-flow restrictions (flow demand from the mixer). Changes in outlet-flow restrictions manifest as variations in pressures acting across the mixer so they can be grouped with pressure changes.

Generally inlet temperature changes cause only small changes (less than 1°C) in the outlet water temperature. Inlet pressure changes can cause changes of a few degrees in circumstances that can occur fairly frequently in many installations.

A change of a few degrees will normally be discernible to the user and may be uncomfortable for a short period of time until the mixer responds to correct the change. In some cases an increase in the outlet water temperature may give rise to a risk of scalding.

Furthermore, if the mixer is slow to respond, the user may attempt to correct the outlet water temperature change by adjusting the mixer which may only add to the problem and risks. For example, if the outlet water temperature falls, the user may adjust the mixer to increase the outlet water temperature such that the outlet water temperature eventually returns to a higher temperature than originally selected increasing the risk of scalding.

For some applications, such as hospitals or care homes for the elderly, accurate control of the outlet water temperature delivered by a mixer is essential and the regulations controlling the permissible temperature variations under different operating conditions are becoming increasingly tighter to reduce the allowable temperature deviation from that selected.

There have been many attempts to solve these problems and a common approach has involved increasing the sensitivity of the thermostat to temperature change and/or to increase the accuracy of the outlet water temperature sensed by the thermostat. These approaches have only had limited success, for example increasing the thermostat sensitivity can lead to the control characteristics becoming unstable giving rise to a phenomenon known as "hunting".

Other approaches involving more complex mechanisms for controlling the outlet water temperature exist, but they are inevitably more expensive.

The present invention has been made from a consideration of the foregoing problems and disadvantages of existing thermostatic mixers, especially those employing a thermostat.

Thus it is a desired aim of the present invention to improve the performance of a thermostatic mixer to changing water pressures, especially the pressures of the hot and cold water supplies.

According to a first aspect of the invention, there is provided a thermostatic mixer as defined in claim 1.

Preferably, the diversion means is arranged to divert varying amounts of either the incoming hot or cold water away from the thermostat under changing water pressure conditions. The diverted water recombines with the water flowing past the thermostat for discharge from the outlet.

By appropriate arrangement of the diversion means, the water pressure changes can alter the amount of water diverted such that the change in water temperature arising at the thermostat adds to the temperature change caused by the initial pressure change.

The combined change in water temperature at the thermostat can be sufficient to develop the thermostat movement necessary to return the outlet water temperature close to the initial set value.

In one arrangement, part of the cold water flow is diverted so that the thermostat resides in water that is slightly hotter than the outlet water temperature.

The diversion means is preferably arranged such that the amount of cold water diverted is reduced as the cold water pressure increases relative to the hot water pressure and is increased as the hot water pressure increases relative to the cold water pressure.

Therefore, for increasing cold water pressures (or decreasing hot water pressures), more of the cold water passes the thermostat and the water temperature at the thermostat reduces relative to the outlet water temperature. The reduced temperature at the thermostat causes the thermostat to move the valve mechanism to reduce the cold water flow and increase the hot water flow to compensate for the increase in the cold water pressure relative to the hot water pressure.

Conversely, for increasing hot water pressures (or decreasing cold water pressures), less of the cold water passes the thermostat and the water temperature at the thermostat increases relative to the outlet water temperature. The increased water temperature at the thermostat causes the thermostat to move the valve mechanism to reduce the hot water flow and increase the cold water flow to compensate for the increase in the hot water pressure relative to the cold water pressure.

In an alternative arrangement, part of the hot water flow is diverted so that the thermostat resides in water that is slightly cooler than the outlet water temperature.

The diversion means is preferably arranged such that the amount of the hot water flow diverted is reduced as the hot water pressure increases relative to the cold water pressure and is increased as the cold water pressure increases relative to the hot water pressure.

Therefore, for increasing hot water pressures (or decreasing cold water pressures), more of the hot water passes the thermostat and the water temperature at the thermostat increases relative to the outlet water temperature. The increased water temperature at the thermostat causes the thermostat to move the valve mechanism to reduce the hot water flow and increase the cold water flow to compensate for the increase in the hot water pressure relative to the cold water pressure.

Conversely, for increasing cold water pressures (or decreasing hot water pressures), less of the hot water passes the thermostat and the water temperature at the thermostat reduces relative to the outlet water temperature. The reduced water temperature at thermostat causes the thermostat to move the valve mechanism to reduce the cold water flow and increase the hot water flow to compensate for the increased cold water pressure relative to the hot water pressure.

Preferably, the diversion means has an entrance sited downstream of the proportioning valve close to one of the valve seats and close to the point where the hot and cold water streams meet. In this way, the amount of water that is diverted varies according to the pressure conditions within the mixer as described above.

Advantageously, the entrance to the diversion means is arranged to be roughly transverse to the stream of water coming into the mixing chamber from the adjacent valve seat so that the water stream jets past the entrance and only a small amount of the water stream is diverted into the entrance.

The amount of the water stream that is diverted varies according to the pressures at the inlets. More especially, the pressure in the mixing chamber generated by the stream of water coming into the mixing chamber from the other valve seat causes a proportion of the water passing the entrance of the diversion means to be forced down it.

In this way, if the water pressure at the inlet associated with the diversion means increases (or the water pressure at the other inlet decreases) then the water velocity across the entrance increases and the amount of water that is diverted reduces as the water stream jets past the entrance.

Conversely, if water pressure at the other inlet increases (or the water pressure at the inlet associated with the diversion means decreases) then the water velocity across the entrance decreases and the amount of water that is diverted increases as the water stream jets past the entrance.

The specific geometry of the diversion means can be arranged to suit the specific mixer in which it is incorporated and details of the size and position can be adapted to optimise the degree of effect on the mixer performance.

There are two options for the diversion means, as described above to divert either some of the hot water or some of the cold water. Either option can be effective in improving the mixer performance under changing inlet pressure conditions, but the option to divert some of the hot stream has additional benefit.

Thus, for the option where some of the hot stream is diverted, the thermostat resides in mixed water that is slightly lower in temperature than the outlet water stream. In the event of a complete failure of the cold water supply, the water temperature at the thermostat increases to the hot water temperature and the speed of movement of the thermostat depends on the step change that it is exposed to. As it is initially cooler than the mixed water, the change in temperature is bigger than normal and the response is quicker. This performance aspect where the speed of response in the event of cold water failure is critical to improving performance and reducing the risk of users being scalded.

The diversion means may comprise a plurality of holes circumferentially spaced apart around an outer region of the mixing chamber. In this way, the diverted flow is confined to the outer region of the mixing chamber away from the thermostat.

Alternatively, the diversion means may comprise an annular passage disposed around the mixing chamber and having an exit axially spaced from the entrance. In one arrangement, the exit opens into an outer region of an enlarged outlet section of the mixing chamber. In this way, the diverted flow is confined to the outer region of the mixing chamber away from the thermostat. In another arrangement, the exit opens downstream of an outlet from the mixing chamber. In this way, the diverted flow by-passes the thermostat.

The diversion means is arranged so that the diverted water is recombined with the mixed water flowing past the thermostat so that the outlet water temperature is substantially unaffected by the amount of water diverted. The water temperature at the thermostat on the other hand is reduced or increased compared to the outlet water temperature by the diverted water and the amount diverted changes in response to pressure changes to exaggerate the water temperature change at the thermostat. In this way, the response of the thermostat to pressure changes is enhanced.

The exact detail of the diversion means and the mixing chamber can be adapted to obtain the required modification in the valve performance. Generally a direct acting thermostatic mixing valve will issue slightly hotter water if the inlet cold pressure is lower than the hot pressure and vice versa.

With the diversion means, it is possible not only to reduce the change in outlet temperature that occurs but also to arrange the internal geometry of the diversion means and mixing chamber so that the water temperature always goes colder or hotter if the inlet pressures become unequal. Generally, a neutral response or tendency to become slightly cooler is preferred.

According to a second aspect of the invention there is provided a method of controlling the temperature of water discharged from a thermostatic mixer as defined in claim 9.

By diverting a portion of either the hot or cold water admitted by the valve, the temperature change occurring at the thermostat due to changes in the operating conditions is increased such that the response of the thermostat to compensate for the changes is enhanced.

Preferably, the amount of water diverted varies according to the pressures of the incoming hot and cold water supplies. In this way, the effect of pressure changes in the hot and cold water supplies on the outlet temperature can be reduced.

A shuttle valve arranged for axial movement between hot and cold seats to vary the relative proportions of hot and cold water flowing to the outlet in response to user selection of the outlet water temperature. Preferably, the shuttle valve is mounted via a bearing such that the shuttle valve is self-aligning relative to the hot and cold seats in end positions of the shuttle valve.

By arranging the shuttle valve to be self-aligning, contact between the sealing faces of the shuttle valve and the hot and cold seats in the end positions of the shuttle valve is enhanced. In this way, a water-tight seal with the hot and cold seats is obtained in the end positions of the shuttle valve.

Preferably, the bearing comprises opposed spherical or part spherical surfaces on the shuttle valve and a mounting for the shuttle valve. The shuttle valve may comprise a central hub and the mounting a pair of members with the hub located between the members and having spherical or part spherical surfaces co-operating with opposed spherical or part-spherical surfaces on the members.

One of the members may be resiliently biased towards the other member. In this way, sealing faces of the shuttle valve are self-aligning on contact with the valve seats and, between the valve seats, the shuttle valve is held in place so as to maintain alignment of the sealing faces parallel to the valve seats and provide a uniform distribution of the hot and cold water streams flowing past the valve seats. As a result, a homogeneous mix of the hot and cold water streams is achieved and the response of the thermostat is not affected by inadequate mixing of the water streams.

Preferably, the mounting forms part of a temperature setting mechanism for adjusting the position of the shuttle valve in accordance with user selection of the outlet water temperature.

The setting mechanism may be non-thermostatic whereby changes in the temperature and/or pressure of the incoming water supplies may cause the outlet water temperature to vary from that selected.

More preferably, the setting mechanism is thermostatic and responds to changes in the outlet water temperature to adjust the position of the shuttle valve to change the relative proportions of hot and cold water to maintain the selected outlet water temperature.

In one arrangement, the setting mechanism includes a thermostat containing thermally responsive material such as a wax that acts on an actuator rod projecting from the thermostat. In this way, the actuator rod extends or retracts to alter the projecting length in response to changes in volume of the wax on change of temperature of the water at the thermostat to adjust the axial position of the shuttle valve between the valve seats.

The shuttle valve may be mounted on the thermostat whereby movement of the thermostat in response to adjustment of the temperature setting mechanism to alter the selected outlet water temperature or change in length of the actuator rod to maintain the selected outlet water temperature is transmitted to the shuttle valve.

The invention will now be described in more detail, by way of example only with reference to the accompanying drawings, wherein:-
**Figure 1** is a perspective view of a thermostatic mixer according to a first embodiment of the invention;
**Figure 2** is a longitudinal sectional view of the mixer shown in Figure 1;
**Figure 3** is an enlarged sectional view showing the diversion passage adjacent to the hot seat; and
**Figure 4** is an enlarged perspective view of the hot seat retainer showing the diversion passage;
**Figure 5** is a longitudinal sectional view of a cartridge unit for a thermostatic mixer according to a second embodiment of the invention;
**Figure 6** is a longitudinal sectional view of a cartridge unit for a thermostatic mixer according to a third embodiment of the invention; and
**Figure 7** is an enlarged sectional view of the shuttle valve shown in Figure 6.

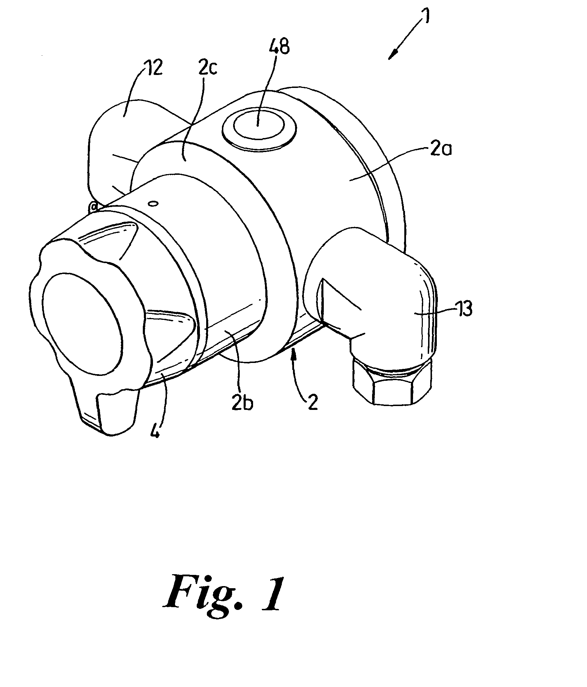

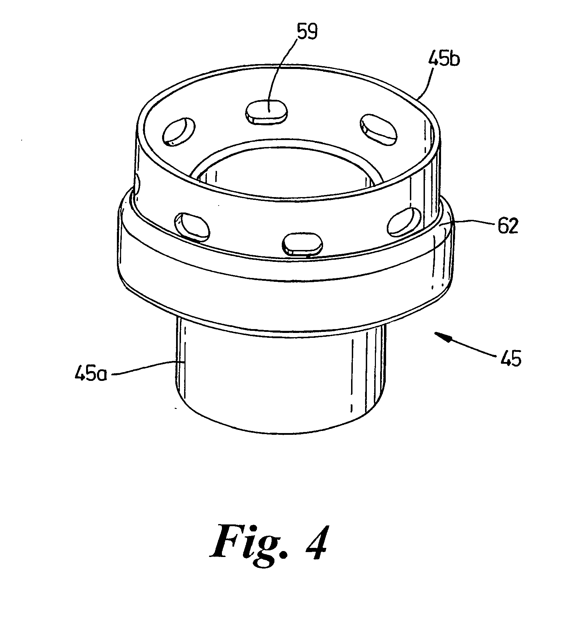

Referring first to Figures 1 to 4 of the accompanying drawings, there is shown a thermostatic mixer 1 for mixing supplies of hot and cold water to provide a source of blended water having a desired temperature according to user selection.

The mixer 1 has an annular body 2 with a rear portion 2a and a front portion 2b connected by an angled shoulder 2c. The body 2 houses a removable cartridge unit 3. A control knob 4 is mounted on a spindle 5 of the cartridge unit 3 for user selection of the flow and temperature of the blended water.

The rear portion 2a of the body 2 has a pair of diametrically opposed internally threaded inlets 6,7 for screw threaded engagement of respective inlet adapters 8,9 sealed by O-rings 10,11 respectively. The inlet adapters 8.9 mount respective elbow connectors 12,13 sealed by O-rings 14,15 respectively and releasably held by respective grub screws 16,17.

The elbow connectors 12,13 are rotatable for connection to incoming water supplies from the top, bottom or rear of the mixer 1. In this embodiment, the inlet connector 12 is for connection to the supply of hot water and the inlet connector 13 is for connection to the supply of the cold water.

The inlets 6,7 open to inlet chambers 18,19 defined by internal partition walls 20,21,22 within the body 2 and sealed by engagement of axially spaced O-rings 23,24,25 mounted on the cartridge unit 3 with axially spaced annular seating faces 20a,21a,22a of the partition walls 20,21, 22.

The seating faces 20a,21a,22a are of increasing diameter from the innermost 20a to the outermost 22a to provide clearance for the O-rings 23,24,25 as the cartridge unit 3 is inserted in the body 2. In this way, the frictional resistance to insertion/removal of the cartridge unit 3 is reduced and the risk of damage to the O-rings 23,24,25 is minimised.

The cartridge unit 3 has a head nut 26 with an external screw thread 27 that is engageable with an internal screw thread 28 of a recess 29 in the front portion 2b of the body 2 to secure releasably the cartridge unit 3 in the body 2.

The spindle 5 is rotatably mounted in the head nut 26 and has an internally threaded bore 30 engageable with an externally threaded extension 31 of a flow control piston 32 received within the head nut 26. The control knob 4 is releasably secured to the outer edge of the spindle 5 by a grub screw 33 accessible through an opening 34 in the knob 4.

The flow control piston 32 has an axial slot 35 engaged by a grub screw 36 mounted in the head nut 26 to prevent the flow control piston 32 rotating relative to the head nut 26. In this way, rotation of the spindle 5 via the knob 4 is converted into axial movement of the flow control piston 32 towards or away from one end of a shuttle valve 37.

The shuttle valve 37 is axially movable within the cartridge unit 3 and is sealed intermediate its ends by an O-ring 38 separating a cold water plenum chamber 39 from a hot water plenum chamber 40 within the cartridge unit 3.

The hot water inlet chamber 18 communicates with the hot water plenum chamber 40 via a series of circumferentially spaced holes (not shown) in the cartridge unit 3. The cold water inlet chamber 19 communicates with the cold water plenum chamber 39 via a further series of circumferentially spaced holes (not shown) in the cartridge unit 3.

The shuttle valve 37 is axially moveable between a cold water seat 41 and a hot water seat 42 to control the relative proportions of cold water and hot water admitted from the plenum chambers 39, 40 to a mixing chamber 43 within the cartridge unit 3.

In this embodiment the cold water seat 41 is formed by an annular seating face at the inner end of the head nut 26 and the hot water seat 42 is formed an annular ring of elastomeric material. In this way the hot seat 42 is resilient to provide an effective seal and assist in loosening or dislodging deposits from the hot seat 42.

The hot seat 42 is located on an abutment shoulder 44 within the cartridge unit 3 and is held in place by a retainer 45. The abutment shoulder 44 leads to an outlet 46 from the cartridge unit 3 that opens to an outlet chamber 47 within the valve body 2.

The outlet chamber 47 communicates with an outlet 48 in the top of the rear portion 2a of the body and with a diametrically opposed outlet (not shown) in the bottom of the rear portion 2a of the body 2.

In use, one of the outlets is connected to a delivery pipe (not shown) for supply of the mixed water to an ablutionary appliance such as a shower handset (not shown) or a spray head (not shown). The other outlet is closed off with a removable blanking plug (not shown).

The retainer 45 has concentric inner and outer cylindrical portions 45a, 45b connected by a radial flange 45c. The outer portion 45b seats on the shoulder 44 and retains the elastomeric ring forming the hot seat 42 in place. The inner portion 45a extends into the outlet 46.

A thermostat 50 extends axially within the cartridge unit 3 and has an actuator rod 51 projecting from one end that engages an adjustable setting screw 52. The thermostat 50 contains a thermally responsive material such as wax that acts on the actuator rod 51 to change the projecting length of the actuator rod 51 in response to changes in volume of the wax caused by change of temperature of the water flowing past the thermostat 50.

The setting screw 52 is threadably mounted in an axial bore 53 of the flow piston 32 to be accessible when the control knob 4 is detached from the spindle 5 for adjusting the position of the setting screw 52 to set the maximum outlet water temperature. Alternatively, the control knob 4 may have a removable trim cover to provide access to the bore 53 for adjusting the setting screw 52 without detaching the control knob 4.

A return spring 54 acts between a spring recess 55 in the retainer 45 and a spider support 56 located on the thermostat 50 to apply a spring bias to the shuttle valve 37. In this way, the shuttle valve 37 follows movement of the thermostat 50 to adjust the position of the shuttle valve 37 between the cold and hot seats 41,42 for setting the desired outlet water temperature and for adjusting the position of the shuttle valve 37 to maintain the selected outlet water temperature as described later.

An overload spring 57 acts in opposition to the return spring 54 and is arranged to allow movement of the thermostat 50 relative to the shuttle valve 37 when the shuttle valve 37 engages the hot seat 42. In this way, damage to the shuttle valve 37 and/or hot seat 42 is prevented.

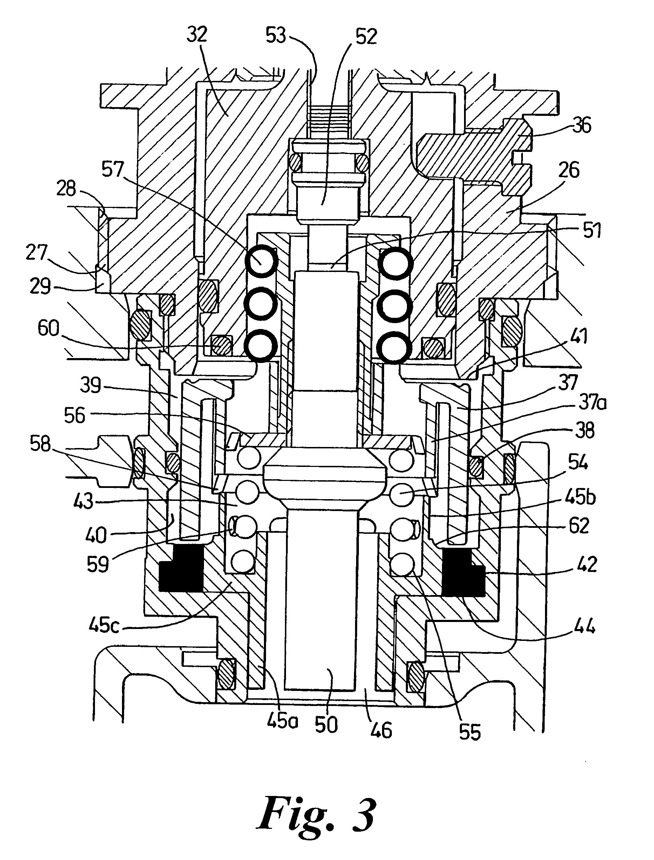

As best shown in Figure 3, the shuttle valve 37 has an internal tubular sleeve 37a that extends axially towards the outer cylindrical portion 45b of the retainer 45. The sleeve 37a defines with the cylindrical portion 45b an annular opening 58 downstream of the hot seat 42 through which hot water can pass into the mixing chamber 43 for mixing with cold water to flow over the temperature responsive region of the thermostat 50.

The outer cylindrical portion 45b of the retainer 45 is also formed with a series of circumferentially spaced holes 59 of oval configuration through which hot water can flow to by-pass the opening 58 to the mixing chamber 43 and part of the temperature responsive region of the thermostat 50.

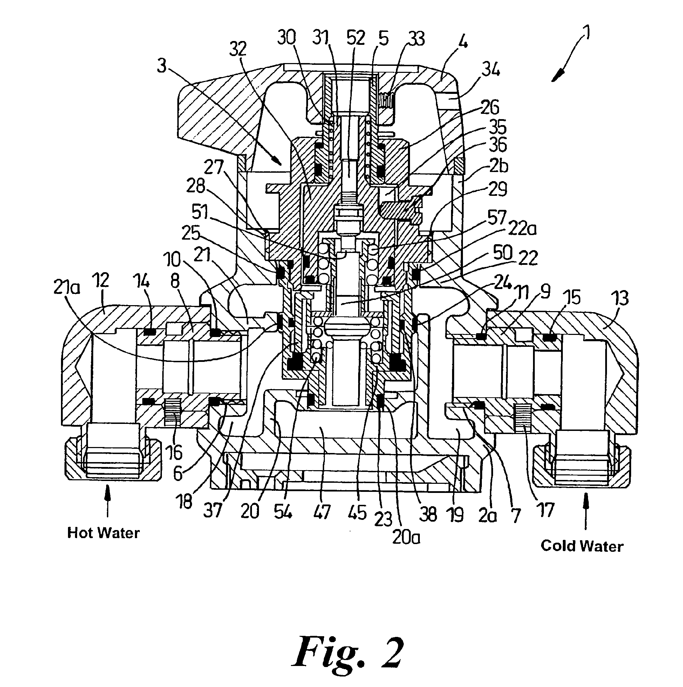

In use, starting from the position shown in Figure 2, the control knob 4 is rotatable in one direction causing axial movement of the flow piston 32 to a closed position in which the flows of hot and cold water are shut-off. The axial movement is initially transmitted to the shuttle valve 37 via the overload spring 57 and thermostat 50 to move the shuttle valve 37 to engage the hot seat 42 and shut-off the flow of hot water.

Continued rotation of the control knob 4 in the same direction causes the flow piston 32 to move towards and engage the cold end of the shuttle valve 37 to shut-off the cold flow. An O-ring 60 in the end face of the flow piston 32 provides a fluid-tight seal with the cold end of the shuttle valve 37.

Rotation of the control knob 4 in the opposite direction from the closed position initially moves the flow piston 32 away from the cold end of the shuttle valve 37 and allows cold water to flow through the mixer 1 until compression of the overload spring 57 is taken up. Continued rotation of the control knob 4 in the same direction causes the shuttle valve 37 and thermostat 50 to follow the movement of the flow piston 32 under the biasing of the return spring 54.

As a result, the hot end of the shuttle valve 37 moves away from the hot seat allowing a progressively increasing flow of hot water and corresponding decreasing flow of cold water through the mixer 1. The control knob 4 is rotatable to position the shuttle valve 37 between the hot and cold seats to vary the relative proportions of hot and cold water flowing through the mixer 1 for user selection of the desired outlet water temperature.

A stop (not shown) may be provided to limit rotation of the control knob 4 to restrict the outlet water temperature that can be selected to prevent accidental scalding. For example, the stop may allow user selection of water temperature from full cold to 40°C. The user may be able to override the stop to allow selection of higher water temperatures if desired.

The incoming hot water flow past the hot seat 42 forms a thin fast moving stream that is turned axially by a curved surface 62 of the retainer 45 level with the hot seat 42 and jets across the holes 59. A portion is diverted through the holes 59 with the remaining portion flowing through the opening 58 to mix with the cold water in the mixing chamber 43 and flow over the temperature responsive part of the thermostat 50. Only a small amount of the hot water is diverted because the holes 59 are transverse to the direction of the hot water stream.

The diverted portion of the hot water stream is confined to the outer regions of the mixing chamber 43 away from the thermostat 50 by the mixed water stream. Both streams leave the cartridge unit 3 through outlet 46 and are combined in the outlet chamber 47. As a result, the thermostat 50 experiences a temperature slightly less than the outlet water temperature.

For a selected outlet water temperature, if the hot water pressure increases or the cold water pressure decreases, the velocity energy of the incoming hot water stream is increased and the amount of hot water diverted through the holes 59 is reduced. This causes the mixed water temperature at the thermostat 50 to increase more than it would have done. As a result, the response of the thermostat 50 to move the shuttle valve 37 closer to the hot seat 42 to increase the flow of cold water to maintain the selected outlet water temperature is enhanced.

Conversely, if the hot water pressure decreases or the cold water pressure increases, the velocity energy of the incoming hot water is reduced and the amount of hot water diverted through the holes 59 is increased. This causes the mixed water temperature at the thermostat 50 to reduce more than it would have done. As a result, the response of the thermostat 50 to move the shuttle valve 37 closer to the cold seat 43 to increase the flow of hot water to maintain the selected outlet water temperature is enhanced.

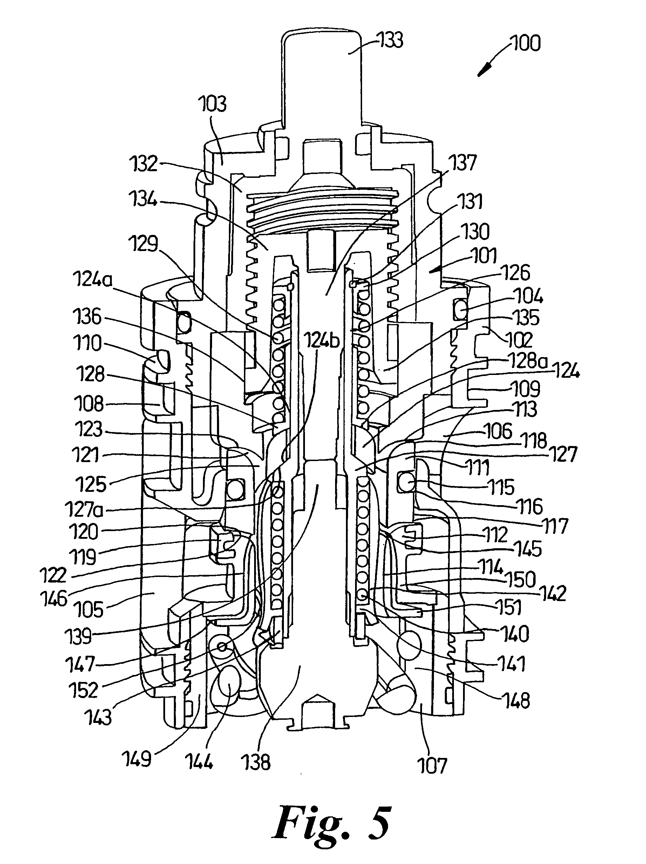

Referring now to Figure 5 of the drawings, there is shown a cartridge unit 100 for a thermostatic mixer (not shown) according to a second embodiment of the invention.

The cartridge unit 100 has an outer shell 101 comprising a bottom part 102 and a top part 103 secured together with an O-ring 104 therebetween. The bottom part 102 has an annular groove 110 for locating an O-ring (not shown) for sealing the cartridge unit 100 in a body (not shown) of the mixer.

The bottom part 102 is generally cylindrical with a pair of opposed inlets 105,106 for connection to supplies of hot and cold water respectively and an axial outlet 107 at the bottom end for blended water.

Each inlet 105,106 is bounded by a groove 108,109 respectively in the bottom part 102 for mounting on an O-ring (not shown) to seal the inlets 105,106 relative to inlet connections (not shown) in the mixer body (not shown).

The inlets 105,106 are in communication with opposite ends of a shuttle valve 111 that is axially movable between hot and cold seats 112 and 113 respectively for controlling the relative proportions of hot and cold water admitted a mixing chamber 114.

The shuttle valve 111 carries an O-ring 115 intermediate its ends in sealing engagement with an internal partition wall 116 of the bottom part 102 to separate the hot and cold water inlets 105,106.

Each end of the shuttle valve 111 has an annular seal face 117,118 providing a small contact seal area that co-operates with the hot and cold seats 112, 113 respectively to break up any deposits and prevent build-up of scale or debris on the seats.

The hot seat 112 has a sealing ring 119 of elastomeric material that is resiliently deformable on application of sealing loads to assist in loosening or dislodging any deposits and ensure that the hot water flow is completely shut-off if the cold water supply fails for any reason.

Downstream of the seal faces 117, 118 the shuttle valve 111 is provided with curved surfaces 120,121 with opposed surfaces 122,123 of the hot and cold seats 112, 113 also being curved. As a result, the streams of hot and cold water are turned in an axial direction and the velocity energy is maintained to promote mixing of the hot and cold streams in the mixing chamber 114.

The shuttle valve 111 is connected to a centre hub 124 via axial webs 125 that assist in keeping the cold water stream flow in an axial direction and maintain an even distribution of the cold water in the mixing chamber 114 for efficient mixing with the hot water.

The centre hub 124 is located on an axially extending tube 126 between an external fixed collar 127 and a spring seat 128 slidably mounted on the tube 126.

The spring seat 128 is biased towards the hub 124 by an overload spring 129 encircling the upper end of the tube 126 and acting between the spring seat 128 and a retainer 130 located by a circlip 131.

Opposed surfaces 127a,128a of the collar 127 and spring seat 128 are spherical and the hub 124 is provided with matching upper and lower spherical surfaces 124a, 124b respectively. In this way, the shuttle valve 111 is held firmly in place on the collar 127 under the biasing of the overload spring 129 but is able to rock via engagement of the spherical surfaces to align with the hot and cold seats 112, 113 when its travel limits are reached.

In this way, any misalignment is automatically corrected and sealing contact to shut-off the hot and cold flows at each end position is assured. Between the end positions, the shuttle valve 111 is held in axial alignment by engagement with the spherical surface 127a of the fixed collar 127 under the biasing of the overload spring 129.

The cartridge unit 100 includes a drive spindle 132 that is rotatably mounted in the upper part 103 of the shell 101 and has a shaft 133 with axial splines (not shown) for mounting a control knob (not shown). A drive nut 134 is screwed into the inner end of the drive spindle 132 and is located against rotation by engagement of a hexagonal flange 135 with a matching hexagonal bore 136 in the cold seat 113. In this way, rotation of the drive spindle 132 via the control knob is converted into axial movement of the drive nut 134.

The drive nut 134 has an axially extending post 137 on the underside that is received in the upper end of the tube 126. A wax filled thermostat 138 is screwed into the lower end of the tube 126 and has an actuator rod 139 projecting towards the post 137 within the tube 126.

The projecting length of the actuator rod 139 changes in response to change in volume of the wax filler caused by change in temperature of the water flowing past the thermostat 138. This change in length is employed to adjust the position of the shuttle valve 111 between the valve seats to maintain a selected water temperature.

A return spring 140 encircling the lower end of the tube 126 acts between the underside of the collar 127 and a flange 141 of a sleeve 142 located on the tube 126 by a centre hub 143. The spring 140 biases the tube 126 towards the drive nut 134 to engage the actuator rod 139 with the post 137.

In this way, axial movement of the drive nut 134 in response to user actuation of the control knob to select a desired water temperature is transmitted to the tube 126 to position the shuttle valve 111 to provide the selected water temperature.

The sleeve 142 shields the return spring 140 from the water stream and prevents the water stream causing vibration or other movement of the return spring 140 that could alter the position of the shuttle valve 111 and change the mixed water temperature.

The thermostat 138 is arranged in the path of the mixed hot and cold water stream and is provided with temperature sensing coils 144 to increase the surface area of the thermostat 138 exposed to the mixed water stream. In this way, the response of the thermostat 138 to change in temperature of the mixed water is improved.

Downstream of the shuttle valve 111, the hot seat 112 is provided with an annular entrance port 145 opening to a diversion passage 146 that extends through the hot seat 112 and opens via a plurality of exit ports 147 to a chamber 148 containing the thermostat 138 and sensing coils 144.

The hot seat 112 comprises an assembly of parts including a base member 149 that screws into the cartridge unit 100, a seating member 150 that mounts the sealing ring 119, a support member 151 and hub 143. The seating member 150 and support member 151 are connected to the base member 149 and define therebetween the diversion passage 146. The hub 143 is connected to the support member 151 by webs 152.

In use, a portion of the hot water admitted to the mixing chamber 114 is diverted into the passage 146. The ports 147 are arranged so that the diverted hot water exiting the passage 146 flows down the outer edge of the chamber 148 and has a negligible effect on the temperature of the main stream of mixed water flowing over the thermostat 138 and sensing coils 144 in the chamber 148.

The diverted water stream and mixed water stream exit the cartridge unit 100 via outlet 107 and recombined in an outlet chamber (not shown) within the mixer before being discharged. As a result, the mixed water temperature at the thermostat 138 is slightly lower than the temperature of the water discharged from the mixer.

Only a small amount of hot water enters the diversion passage 146 because the port 145 is transverse to the direction of the hot water stream entering the mixing chamber 114.

If the hot water pressure increases or the cold water pressure decreases, the hot water jets past the port 145 so that less hot water is diverted and the mixed water temperature at the thermostat 138 increases more than it would have done and the response of the thermostat 138 to adjust the position of the shuttle valve 111 is enhanced.

Conversely, if the hot water pressure decreases or the cold water pressure increases, more of the hot water is diverted and the mixed water temperature at the thermostat 138 reduces more than it would have done and the response of the thermostat 138 to adjust the position of the shuttle valve 111 is enhanced.

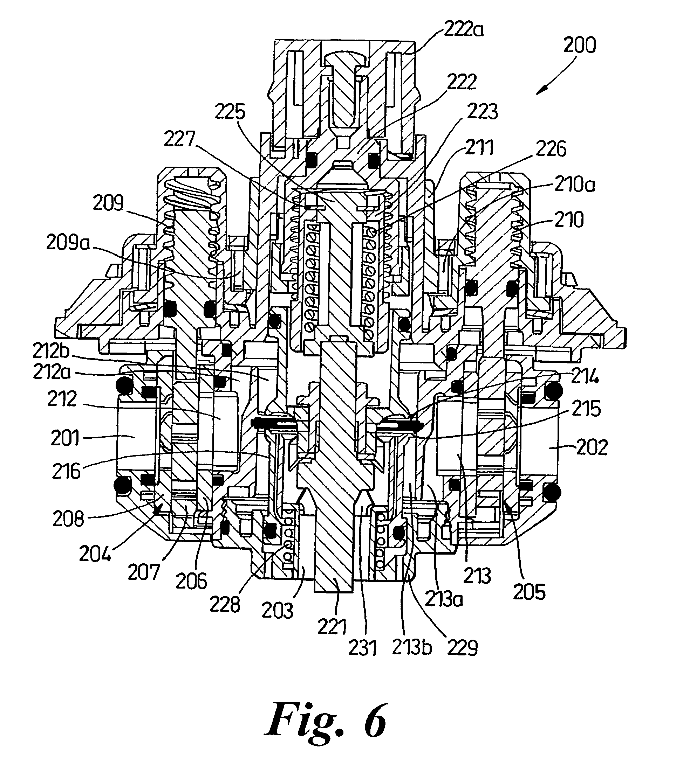

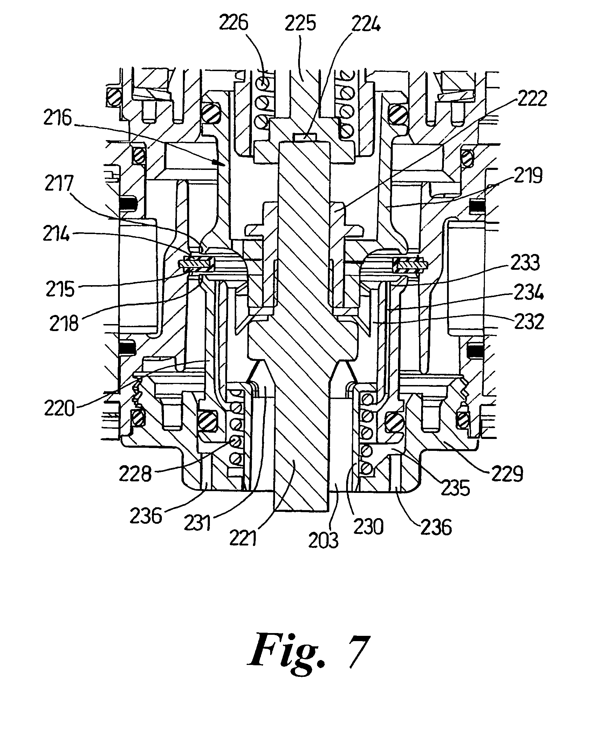

Referring now to Figures 6 and 7 there is shown a cartridge unit 200 for a mixer according to a third embodiment of the invention.

The cartridge unit 200 has inlets 201,202 for connection to supplies of hot and cold water and an outlet 203 for mixed water.

Each inlet 201,202 has a respective flow control valve 204,205 comprising three ceramic plates 206,207,208 of which the centre plate 207 is slidable relative to the outer plates 206,208 to vary the overlap of openings in the centre plate 207 and one outer plate 208 to vary the flow from full-off to full-on. In Figure 6, the hot flow is shown full-off and the cold flow full-on for the purpose of illustration only and, in use, both valves 204,205 are arranged to open and close at the same time.

Each valve 204,205 has a screw jack 209,210 respectively that are linked via gears 209a, 210a to a common flow control spindle 211 for a manually operable control member (not shown) for simultaneous adjustment as the centre plate 207 to open and close both valves 204,205 in a synchronised manner. In this way, adjustment of the valves 204,205 to increase/decrease the total flow does not alter the relative proportions of hot and cold water and the selected water temperature is substantially unaffected.

Each valve 204,205 leads to an inlet chamber 212,213 respectively. In this embodiment, the inlet chambers 212,213 each comprise an outer chamber 212a,213a and an inner chamber 212b,213b for directing the incoming flows of hot and cold water to hot and cold seats 214,215 respectively of a shuttle valve 216.

The hot and cold seats 214,215 are provided by opposite sides of a thin metal washer coated on both sides with a layer of elastomeric material. In this way the seats are resilient for engagement with seal faces 217,218 respectively of the shuttle valve 216 to assist in dislodging scale or deposits from the seats 214,215 and ensure a fluid tight seal in end positions of the shuttle valve 216.

The shuttle valve 216 comprises a pair of members 219,220 mounted on a wax filled thermostat 221 in axially fixed relationship by a retainer 222 screwed onto the thermostat 221.

The cartridge unit 200 includes a rotatable control spindle 222 for detachably mounting a control knob (not shown) via an adaptor 222a for user selection of the mixed water temperature.

A drive member 223 is screwed into the control spindle 222 and is located against rotation so that rotation of the control spindle 222 is converted into axial movement of the drive member 223 towards and away from the thermostat 221.

The thermostat 221 has an actuator rod 224 projecting from one end to engage a coupling member 225 mounted in the drive member 223 and biased towards the actuator rod 224 by an overload spring 226.

The coupling member 225 is located in an advanced position shown in Figure 6 by engagement of a stop washer 227 with the drive member 223 under the biasing of overload spring 226.

The thermostat 221 is resiliently biased towards the coupling member 225 by a return spring 228 acting between an outlet member 229 and a retainer 230 having integral webs 231 engaging with the thermostat 221.

Axial movement of the drive member 223 in response to rotation of the control spindle 222 is transmitted to the thermostat 221 via the coupling member 225 biased to the advanced position by the overload spring 226 to adjust the position of the shuttle valve 216 to vary the relative proportions of hot and cold water admitted to a mixing chamber 232 in accordance with user selection of the desired water temperature.

The thermostat 221 is arranged in the path of the mixed water from the mixing chamber 232 and is responsive to change in temperature of the mixed water from that selected to adjust the position of the shuttle valve 216 to maintain the selected water temperature.

More particularly, the projecting length of the actuator rod 224 changes in response to change in volume of the wax filler caused by change in temperature of the water flowing past the thermostat 221. This change in length is employed to adjust the position of the shuttle valve 216 between the valve seats to maintain a selected water temperature.

Downstream of the shuttle valve 216, the valve member 220 co-operable with the cold seat 215 is provided with an annular entrance port 233 leading to a diversion passage 234 that opens into a chamber 235 defined between the outlet member 229 and return spring retainer 230. The chamber 235 is provided with a plurality of exit holes 236 circumferentially spaced apart around the outlet 203 for the mixed water.

In use, a portion of the cold water admitted by the shuttle valve 216 is diverted through the diversion passage 234 where it bypasses the mixing chamber 232 and the thermostat 221. The diverted water exits the cartridge unit 200 via the holes 236 and combines with the mixed water exiting cartridge unit 200 via the outlet 203 in an outlet chamber (not shown) within the mixer body (not shown). As a result, the temperature of the mixed water at the thermostat 221 is slightly higher than the temperature of the outlet water discharged from the mixer.

Only a small amount of cold water enters the diversion passage 234 because the port 233 is transverse to the direction of the cold water stream entering the mixing chamber 232.

If the pressure of the hot water increases or the pressure of the cold water decreases, the higher energy level of the hot water entering the mixing chamber 232 causes more cold water to divert into the diversion passage 234. As a result, the mixed water temperature sensed by the thermostat 221 is higher than it would otherwise be and the response of the thermostat 221 is enhanced.

Conversely, if the pressure of the hot water decreases or the pressure of the cold water increases, the higher energy level of the cold water causes less cold water to divert into the diversion passage. As a result, the mixed water temperature sensed by the thermostat 221 is lower than it would otherwise be and the response of the thermostat 221 is enhanced.

The improved response of the mixer according to the invention is demonstrated by the following example using mathematical modelling to compare the effect of change in inlet pressures on outlet water temperature for the mixer shown in Figure 5 with the diversion passage (Table 2) and the same mixer without the diversion passage (Table 1). The starting conditions were the same in both cases as follows:

| | |
|---|---|
| Hot water temperature | 57°C |
| Cold water temperature | 15°C |
| Flow rate | 9 litres per minute |
| Initial temperature set to | 40°C |

**Table 1**

| Hot Pressure kPa | Cold Pressure kPa | Outlet Temp °C | Thermostat Temp °C | Outlet Temp change °C |
|---|---|---|---|---|
| 300 | 300 | 40 | 40 | - |
| 300 | 200 | 41.5 | 41.5 | +1.5 |
| 300 | 100 | 41.8 | 41.8 | +1.8 |
| 300 | 50 | 41.9 | 41.9 | +1.9 |
| 200 | 300 | 38.9 | 38.9 | -1.1 |
| 100 | 300 | 38.7 | 38.7 | -1.3 |
| 50 | 300 | 38.6 | 38.6 | -1.4 |

**Table 2**

| Hot Pressure kPa | Cold Pressure kPa | Outlet Temp °C | Thermostat Temp °C | Outlet Temp change °C |
|---|---|---|---|---|
| 300 | 300 | 40 | 38.5 | - |
| 300 | 200 | 40.5 | 40.1 | + 0.5 |
| 300 | 100 | 40.4 | 40.3 | +0.4 |
| 300 | 50 | 40.3 | 40.5 | +0.3 |
| 200 | 300 | 39.8 | 37.4 | -0.2 |
| 100 | 300 | 40.1 | 37.1 | +0.1 |
| 50 | 300 | 40.3 | 37.1 | +0.3 |

As can be seen from the Tables, the outlet water temperature changes are much smaller in the mixer with the diversion passage according to the present invention where there are temperature changes taking place at the thermostat that drive the mechanism to compensate for the pressure changes. In particular, it can be seen that the range of outlet water temperature change is 0.7°C in the mixer with the diversion passage compared with a range of 3.3°C in the same mixer without the diversion passage. Such reduced temperature changes in the mixer of the invention would hardly be noticeable by a user and reduce significantly any risk of scalding by a sudden change in either of the incoming supplies to the mixer.

As will be understood from the foregoing description of exemplary embodiments, the effect of pressure changes on the outlet water temperature are reduced by altering the amount of the hot or cold water flow that is diverted to increase the temperature change experienced by the thermostat such that the response of the thermostat is enhanced. In this way, the effect of pressure changes on the outlet water temperature can be significantly reduced.

It will also be appreciated that the invention has application to a wide range of types of thermostatic mixers and that the means for diverting a portion of the hot or cold water flow can take a variety of forms and is not limited to the constructions and arrangements described above.

Moreover, it will be understood that any feature of the embodiments described herein may be used separately or in combination with any other feature of the same or different embodiments.

It will be apparent to those skilled in the art that variations and modification of the invention can be made without departing from the concept or principles described herein and all such changes are within the scope of the invention, as defined in the claims.

## Claims

1. A thermostatic mixer comprising a body (2) having a pair of inlets (6,7) and an outlet (48), the inlets (6,7) being arranged for connection respectively to hot and cold water supplies, valve means (37;111;216) and a thermostat, the valve means being adapted to vary the relative proportions of hot and cold water flowing past a thermostat (50;138;221) to the outlet (48), the thermostat (50;138;221) being responsive to water temperature to adjust the valve means (37;111;216) in accordance with user selection of the outlet water temperature **characterised by** diversion means (59;146;234) downstream of the valve means (37;111;216) for diverting part of the flow of one of the supplies away from the thermostat (50;138;221) so that the water temperature experienced by the thermostat (50;138;221) is altered to enhance the response of the thermostat (50;138;221) to changes in the selected outlet water temperature.

2. A thermostatic mixer according to claim 1 wherein the diverted water recombines with the water flowing past the thermostat (50;138;221) for discharge from the outlet (48) and the diversion means (59;146;234) is arranged to divert varying amounts of either the incoming hot water or cold water away from the thermostat (50;138;221) under changing water pressure conditions such that the change in water temperature arising at the thermostat (50;138;221) adds to the temperature change caused by the initial pressure change and the combined change in water temperature at the thermostat (50;138;221) is sufficient to develop the thermostat movement necessary to return the outlet water temperature close to the initial set value.

3. A thermostatic mixer according to claim 1 or claim 2 wherein part of the cold water flow is diverted so that the thermostat (221) resides in water that is slightly hotter than the outlet water temperature and the diversion means (234) is arranged such that the amount of cold water diverted is reduced as the cold water pressure increases relative to the hot water pressure so that more of the cold water passes the thermostat (221) and the water temperature at the thermostat (221) reduces relative to the outlet water temperature causing the thermostat (221) to move the valve means (216) to reduce the cold water flow and increase the hot water flow to compensate for the increase in the cold water pressure relative to the hot water pressure, and the amount of cold water diverted is increased as the hot water pressure increases relative to the cold water pressure so that less of the cold water passes the thermostat (221) and the water temperature at the thermostat (221) increases relative to the outlet water temperature causing the thermostat (221) to move the valve means (216) to reduce the hot water flow and increase the cold water flow to compensate for the increase in the hot water pressure relative to the cold water pressure.

4. A thermostatic mixer according to claim 1 or claim 2 wherein, part of the hot water flow is diverted so that the thermostat (50;138) resides in water that is slightly cooler than the outlet water temperature and the diversion means (59;146) is arranged such that the amount of the hot water flow diverted is reduced as the hot water pressure increases relative to the cold water pressure so that more of the hot water passes the thermostat (50;138) and the water temperature at the thermostat (50;138) increases relative to the outlet water temperature causing the thermostat (50;138) to move the valve means (37;111) to reduce the hot water flow and increase the cold water flow to compensate for the increase in the hot water pressure relative to the cold water pressure and the amount of the hot water flow diverted is increased as the cold water pressure increases relative to the hot water pressure so that less of the hot water passes the thermostat (50; 138) and the water temperature at the thermostat (50; 138) reduces relative to the outlet water temperature causing the thermostat (50; 138) to move the valve means (37;111) to reduce the cold water flow and increase the hot water flow to compensate for the increased cold water pressure relative to the hot water pressure.

5. A thermostatic mixer according to any preceding claim wherein, the valve means (37;111;216) comprises a shuttle valve (37;111;216) mounted for axial movement relative to a hot water valve seat (42;112;214) and a cold water valve seat (41;113;215) to control the relative proportions of hot and cold water admitted to a mixing chamber (43;114;232).

6. A thermostatic mixer according to claim 5 wherein the diversion means (146;234) has an entrance (145;233) sited downstream of the shuttle valve (111;216) close to one of the valve seats (111,112;214,215) and close to the point where the hot and cold water streams meet.

7. A thermostatic mixer according to claim 6 wherein the entrance (145;233) to the diversion means (146;234) is arranged to be roughly transverse to the stream of water coming into the mixing chamber (114;232) from the adjacent valve seat (111,112;214;215) so that the water stream jets past the entrance (145;233) and only a small amount of the water stream is diverted into the entrance (145;233).

8. A thermostatic mixer according to any preceding claim wherein, the diverted water recombines with the water flowing past the thermostat (50;138;221)..

9. A method of controlling the temperature of water discharged from a thermostatic mixer having a body with a pair of inlets (6.7) for connection to hot and cold water supplies and an outlet (48) for mixed water comprising the steps of providing between the inlets (6,7) and the outlet (48) a valve (37;111;216) downstream of the inlets (6,7) to control the relative proportions in which hot and cold water are mixed according to user selection of a desired outlet water temperature, and a thermostat (50;138;221) downstream of the valve (37;111;216) for monitoring the water temperature and adjusting the valve (37;111;216) to vary the relative proportions of hot and cold water according to detected changes in the water temperature **characterised by** diverting a portion of either the hot or cold water downstream of the valve (37;111;216) away from the thermostat (50;138;221) so that the water temperature experienced by the thermostat (50;138;221) is altered to enhance the response of the thermostat to changes in the selected outlet water temperature.

10. A method according to claim 9 wherein the diverted portion of either the hot water or cold water admitted by the valve (37;111;216) increases the temperature change occurring at the thermostat (50;138;221) due to changes in the operating conditions such that the response of the thermostat (50;138;221) to compensate for the changes is enhanced.

11. A method according to claim 10 wherein the amount of water diverted varies according to the pressures of the incoming hot and cold water supplies.

## Patentansprüche

1. Thermostatischer Mischer, umfassend ein Gehäuse (2) mit einem Paar von Einlässen (6,7) und einem Auslass (48), wobei die Einlässe (6,7) für den Anschluss an die Heiß- bzw. Kaltwasserversorgung ausgebildet sind, mit Ventilmitteln (37;111;216) und einem Thermostaten, welche geeignet sind, die relativen Anteile von heißem und kaltem Wasser zu ändern, welche an dem Thermostaten (50;138;221) vorbei zum Auslass fließen, wobei der Thermostat (50;138;221) auf die Wassertemperatur anspricht, um die Ventilmittel (37;111;216) entsprechend der Wahl der Temperatur des Wassers am Auslass einzustellen, **gekennzeichnet durch** Ableitungsmittel (59;146;234), welche stromabwärts der Ventilmittel (37;111;216) angeordnet sind, um einen Teil der Strömung eine der Zufuhren von dem Thermostat (50;138;221) abzuleiten, so dass die **durch** den Thermostaten (150;138;221) erfasste Wassertemperatur geändert wird, um das Ansprechen des Thermostaten (50;138;221) zum Ändern der gewählten Auslasswassertemperatur zu verbessern.

2. Thermostatischer Mischer nach Anspruch 1, wobei das abgeleitete Wasser sich wieder mit dem an dem Thermostaten (50;138;221) vorbeiströmende Wasser vereint, um aus dem Auslass (48) auszuströmen, und wobei das Ableitungsmittel (59;146;234) derart angeordnet ist, dass es unterschiedliche Mengen entweder des einströmenden Heißwassers oder des Kaltwassers von dem Thermostaten (50;138;221) unter sich ändernden Druckzuständen des Wassers ableitet, derart, dass die am Thermostaten (50;138;221) auftretende Wassertemperatur zu der Temperaturänderung beiträgt, welche durch die anfängliche Druckänderung hervorgerufen ist, und wobei die kombinierte Änderung der Wassertemperatur an dem Thermostaten (50;138;221) ausreicht, um eine Bewegung des Thermostaten zu entwickeln, die notwendig ist, um die Auslasswassertemperatur dicht an den anfangs eingestellten Wert zurückzuführen.

3. Thermostatischer Mischer nach Anspruch 1 oder 2, wobei ein Teil des Kaltwasserstroms abgeleitet wird, so dass der Thermostat (221) in einem Wasser befindlich ist, welches geringfügig heißer ist als die Auslasswassertemperatur, und wobei das Ableitungsmittel (234) derart angeordnet ist, dass die abgeleitete Kaltwassermenge verringert wird, während der Kaltwasserdruck im Vergleich zum Heißwasserdruck zunimmt, so dass mehr des kalten Wassers am Thermostaten (221) vorbeiströmt und die Wassertemperatur am Thermostaten (221) sich im Vergleich zur Auslasswassertemperatur verringert und den Thermostaten (221) dazu bringt, das Ventilmittel (216) zu bewegen, um die Kaltwasserströmung zu verringern und die Heißwasserströmung zu vergrößern, um **dadurch** die Zunahme des Kaltwasserdrucks im Vergleich zum Heißwasserdruck auszugleichen, und wobei die Menge des abgeleiteten Kaltwassers zunimmt, während der Heißwasserdruck im Vergleich zum Kaltwasserdruck steigt, so dass weniger des kalten Wassers am Thermostaten (221) vorbeiströmt und die Wassertemperatur am Thermostaten (221) im Vergleich zur Auslasswassertemperatur zunimmt und bewirkt, dass der Thermostat (221) das Ventilmittel (216) bewegt, um die Heißwasserströmung zu verringern und die Kaltwasserströmung zu erhöhen, um **dadurch** die Zunahme des Heißwasserdrucks bezüglich des Kaltwasserdrucks auszugleichen.

4. Thermostatischer Mischer nach Anspruch 1 oder 2, wobei ein Teil des Heißwasserstromes abgeleitet wird, so dass der Thermostat (50;130) in Wasser befindlich ist, welches geringfügig kühler ist als die Auslasswassertemperatur, und wobei das Ableitungsmittel (59;146) derart angeordnet ist, dass die abgeleitete Menge des Heißwasserstroms verringert wird, wenn der Heißwasserdruck bezüglich des Kaltwasserdruckes steigt, so dass mehr des heißen Wassers am Thermostaten (50;138) vorbeiströmt und die Wassertemperatur am Thermostaten (50;138) bezüglich der Auslasswassertemperatur ansteigt und bewirkt, dass der Thermostat (50;138) das Ventilmittel (37;111) bewegt, um die Heißwasserströmung zu verringern und um die Kaltwasserströmung zu erhöhen, um **dadurch** die Zunahme des Heißwasserdrucks bezüglich des Kaltwasserdrucks auszugleichen, und wobei die Menge des abgeleiteten Heißwasserstroms erhöht wird, wenn der Kaltwasserdruck bezüglich des Heißwasserdrucks zunimmt, so dass weniger an heißem Wasser am Thermostaten (50;138) vorbeiströmt und die Wassertemperatur am Thermostaten (50;138) bezüglich der Auslasswassertemperatur verringert wird, wodurch der Thermostat (50;138) veranlasst wird, das Ventilmittel (37;111) zu bewegen, um die Kaltwasserströmung zu verringern und die Heißwasserströmung zu erhöhen, um **dadurch** den Anstieg des Kaltwasserdrucks bezüglich des Heißwasserdrucks auszugleichen.

5. Thermostatischer Mischer nach einem der vorstehenden Ansprüche, wobei das Ventilmittel (37;111;216) ein Wechselventil (37;111;216) umfasst, welches für eine Axialbewegung zwischen einem Heißwasserventilsitz (42;112;214) und einem Kaltwasserventilsitz (41;113;215) montiert ist, um die relativen Anteile von heißem und kaltem Wasser zu steuern, welche in einer Mischkammer (43;114;232) eingelassen werden.

6. Thermostatischer Mischer nach Anspruch 5, wobei das Ableitmittel (146;234) einen Eingang (145;233) aufweist, welcher stromabwärts des Wechselventils (111;216) dicht an einem der Ventilsitze (111;112;214;215) und dicht an dem Punkt angeordnet ist, wo sich die Heiß- und Kaltwasserströme treffen.

7. Thermostatischer Mischer nach Anspruch 6, wobei der Eingang (145;233) zu dem Ableitungsmittel (146;234) derart angeordnet ist, dass er etwa quer zur Strömung des Wassers liegt, welches in die Mischkammer (114;232) vom benachbarten Ventilsitz (111;112;214;215) gelangt, so dass die Wasserstromstrahlen an dem Eingang (145;233) vorbeiströmen und lediglich eine kleine Menge des Wasserstroms in dem Eingang (145;233) abgeleitet wird.

8. Thermostatischer Mischer nach einem der vorstehenden Ansprüche, wobei sich das abgeleitete Wasser wieder mit dem an dem Thermostaten (50;138;221) vorbeiströmenden Wasser vereinigt.

9. Verfahren zum Steuern der Temperatur von Wasser, welches aus einem thermostatischen Mischer ausgestoßen wird, welcher ein Gehäuse mit einem Paar von Einlässen (6,7) zum Anschluss an Heiß- und Kaltwasserversorgungen und einen Auslass (48) für gemischtes Wasser aufweist, umfassend die Schritte der Bereitstellung zwischen den Einlassen (6,7) und dem Auslass (48) ein Ventil (37;111;216) stromabwärts der Einlässe (6,7) zum Steuern der relativen Anteile, in welchen heißes und kaltes Wasser entsprechend der Wahl eines Benutzers einer gewünschten Auslasswassertemperatur gemischt werden und eines Thermostaten (50;138;221) stromabwärts des Ventils (37;111;216) zur Überwachung der Wassertemperatur und Verstellung des Ventils (37;111;216) zur Änderung der relativen Anteile von heißem und kaltem Wasser entsprechend der erfassten Änderungen in der Wassertemperatur, **gekennzeichnet durch** das Ableiten eines Teils, entweder des heißen oder des kalten Wassers, stromabwärts des Ventils (37;111;216) weg vom Thermostaten (50;138;221), so dass die **durch** den Thermostaten (50;138;221) erfahrene Wassertemperatur geändert wird, um das Ansprechen des Thermostaten auf Änderungen der gewählten Auslasswassertemperatur zu verbessern.

10. Verfahren nach Anspruch 9, wobei der abgeleitete Anteil, entweder des heißen Wassers oder des kalten Wassers, welcher durch das Ventil (37;111;216) zugelassen wird, die Temperaturänderung erhöht, welche am Thermostaten (50;138;221) aufgrund der Betriebsbedingungen auftritt, so dass das Ansprechen des Thermostaten (50;138;221) zum Ausgleich der Änderungen verbessert wird.

11. Verfahren nach Anspruch 10, wobei die abgeleitete Wassermenge sich entsprechend der Drücke der einströmenden Heiß- und Kaltwasserversorgung ändert.

## Revendications

1. Mélangeur thermostatique comprenant un corps (2) ayant une paire d'entrées (6, 7) et une sortie (48), les entrées (6, 7) étant agencées pour la connection respectivement à des alimentations d'eaux chaude et froide, des moyens de vanne (37; 111; 216) et un thermostat, les moyens de vanne étant aptes à faire varier les proportions relatives d'eaux chaude et froide s'écoulant devant le thermostat (50; 138; 221) à la sortie (48), le thermostat (50; 138; 221) réagissant à la température de l'eau pour ajuster les moyens de vanne (37; 111; 216) en accord avec la sélection par l'utilisateur de la température de sortie d'eau, **caractérisé par** des moyens de déviation (59; 146; 234) en aval des moyens de vanne (37; 111; 216) pour dévier une partie de l'écoulement d'une des alimentations au loin du thermostat (50; 138; 221) de sorte que la température de l'eau subie par le thermostat (50; 138; 221) est modifiée pour augmenter la réponse du thermostat (50; 138; 221) à des changements dans la température de sortie d'eau sélectionnée.

2. Mélangeur thermostatique selon la revendication 1, dans lequel l'eau déviée se recombine avec l'eau s'écoulant devant le thermostat (50; 138; 221) pour l'évacuation à la sortie (48), et le moyen de déviation (59; 146; 234) est agencé pour dévier des quantités variables soit d'eau chaude affluente soit d'eau froide au loin du thermostat (50; 138; 221) sous des conditions de pression d'eau changeantes de sorte que le changement dans la température de l'eau se produisant au thermostat (50; 138; 221) contribue au changement de température provoqué par le changement de pression initial, et le changement combiné de la température de l'eau au thermostat (50; 138; 221) est suffisant pour développer le mouvement du thermostat nécessaire pour ramener la température de sortie d'eau à proximité de la valeur réglée initialement.

3. Mélangeur thermostatique selon la revendication 1 ou la revendication 2, où une partie de l'écoulement d'eau froide est déviée de sorte que le thermostat (221) réside dans de l'eau qui est légèrement plus chaude que la température de sortie d'eau, et le moyen de déviation (134) est agencé de telle sorte que la quantité d'eau froide déviée est réduite lorsque la pression de l'eau froide augmente par rapport à la pression de l'eau chaude de sorte que plus d'eau froide passe devant le thermostat (221), et la température de l'eau au thermostat (221) diminue relativement à la température de sortie d'eau en amenant le thermostat (221) à déplacer le moyen de vanne (216) afin de réduire l'écoulement d'eau froide et d'augmenter l'écoulement d'eau chaude pour compenser l'augmentation de la pression de l'eau froide relativement à la pression de l'eau chaude, et la quantité d'eau froide déviée est augmentée lorsque la pression de l'eau chaude augmente par rapport à la pression de l'eau froide de sorte que moins d'eau froide passe devant le thermostat (221), et la température de l'eau au thermostat (221) augmente par rapport à la température de sortie d'eau en amenant le thermostat (221) à déplacer le moyen de vanne (216) pour réduire l'écoulement de l'eau chaude et augmenter l'écoulement de l'eau froide afin de compenser l'augmentation dans la pression de l'eau chaude par rapport à la pression de l'eau froide.

4. Mélangeur thermostatique selon la revendication 1 ou la revendication 2, dans lequel une partie de l'écoulement d'eau chaude est déviée de sorte que le thermostat (50; 138) réside dans de l'eau qui est légèrement plus froide que la température de sortie d'eau, et le moyen de déviation (59; 146) est agencé de telle sorte que la quantité de l'écoulement d'eau chaude déviée est réduite lorsque la pression de l'eau chaude augmente par rapport à la pression de l'eau froide de sorte que plus d'eau chaude passe devant le thermostat (50; 138), et la température de l'eau au thermostat (50; 138) augmente par rapport à la température de sortie d'eau en amenant le thermostat (50; 138) à déplacer le moyen de vanne (37; 111) afin de réduire l'écoulement de l'eau chaude et d'augmenter l'écoulement de l'eau froide pour compenser l'augmentation de la pression de l'eau chaude par rapport à la pression de l'eau froide, et la quantité d'écoulement d'eau chaude déviée est augmentée lorsque la pression de l'eau froide augmente par rapport à la pression de l'eau chaude de sorte que moins d'eau chaude passe devant le thermostat (50; 138), et la température de l'eau au thermostat (50; 138) diminue par rapport à la température de sortie d'eau en amenant le thermostat (50; 138) à déplacer le moyen de vanne (37; 111) pour réduire l'écoulement de l'eau froide et pour augmenter l'écoulement de l'eau chaude pour compenser la pression d'eau froide augmentée par rapport à la pression de l'eau chaude.

5. Mélangeur thermostatique selon l'une quelconque des revendications précédentes, où le moyen de vanne (37; 111; 216) comprend un clapet navette (37; 111; 216) installé en vue d'un mouvement axial relativement à un siège de vanne d'eau chaude (42; 112; 214) et un siège de vanne d'eau froide (41; 113; 215) pour commander les proportions relatives d'eaux chaude et froide admises à la chambre de mélange (43; 114; 232).

6. Mélangeur thermostatique selon la revendication 5, dans lequel le moyen de déviation (146; 234) présente une entrée (145; 233) située en aval du clapet navette (111; 216) proche d'un des sièges de vanne (111, 112; 214, 215) et proche du point où les flux d'eau chaude et froide se rencontrent.

7. Mélangeur thermostatique selon la revendication 6, dans lequel l'entrée (145; 233) au moyen de déviation (146; 234) est agencée pour être grossièrement transversale au flux d'eau entrant dans la chambre de mélange (114; 232) du siège de vanne adjacent (111, 112; 214; 215) de sorte que le flux d'eau passe en jet devant l'entrée (145; 233), et seulement une petite quantité du flux d'eau est déviée dans l'entrée (145; 233).

8. Mélangeur thermostatique selon l'une quelconque des revendications précédentes, dans lequel l'eau déviée se recombine avec l'eau s'écoulant devant le thermostat (50; 138; 221).

9. Procédé de réglage de la température de l'eau évacuée par un mélangeur thermostatique ayant un corps avec une paire d'entrées (6, 7) pour la connection à des alimentations d'eaux chaude et froide et une sortie (48) pour l'eau mélangée, comprenant les étapes consistant à prévoir entre les entrées (6, 7) et la sortie (48) une vanne (37; 111; 216) en aval des entrées (6, 7) pour commander les proportions relatives selon lesquelles l'eau chaude et froide sont mélangées en accord avec la sélection par l'utilisateur d'une température de sortie d'eau souhaitée, et un thermostat (50; 138; 221) en aval de la vanne (37; 111; 216) pour surveiller la température de l'eau et pour régler la vanne (37; 111; 216) afin de faire varier les proportions relatives de l'eau chaude et froide en accord avec les changements détectés dans la température de l'eau, **caractérisé en** déviant une portion soit de l'eau chaude soit de l'eau froide en aval de la vanne (37; 111; 216) au loin du thermostat (50; 138; 221) de sorte que la température de l'eau subie par le thermostat (50; 138; 221) est modifiée pour augmenter la réponse du thermostat à des changements dans la température de sortie d'eau sélectionnée.

10. Procédé selon la revendication 9, dans lequel la portion déviée soit d'eau chaude soit d'eau froide admise par la vanne (37; 111; 216) fait augmenter le changement de température se produisant au thermostat (50; 138; 221) à cause de changements dans les conditions de fonctionnement de sorte que la réponse du thermostat (50; 138; 221) pour compenser les changements est augmentée.

11. Procédé selon la revendication 10, dans lequel la quantité d'eau déviée varie selon les pressions des alimentations d'eaux chaude et froide entrantes.
